## Europäisches Patentamt
## European Patent Office
## Office européen des brevets

(19)

(11) Veröffentlichungsnummer: **0 008 448**
**B1**

(12)

# EUROPÄISCHE PATENTSCHRIFT

(45) Veröffentlichungstag der Patentschrift: **30.06.82**

(51) Int. Cl.³: **G 02 B 27/02, G 03 B 23/04**

(21) Anmeldenummer: **79103022.4**

(22) Anmeldetag: **18.08.79**

(54) **Dia-Betrachter.**

(30) Priorität: **28.08.78 DE 2837421 U**

(43) Veröffentlichungstag der Anmeldung:
· **05.03.80 Patentblatt 80/5**

(45) Bekanntmachung des Hinweises auf die Patenterteilung:
**30.06.82 Patentblatt 82/26**

(84) Benannte Vertragsstaaten:
**AT BE CH FR GB IT NL**

(56) Entgegenhaltungen:
**DE - A - 1 946 294**
**DE - A - 2 515 827**
**DE - B - 1 797 470**
**DE - U - 1 895 855**
**DE - U - 1 965 982**
**US - A - 3 121 368**

(73) Patentinhaber: **Carl Neithold KG**
**Sulzbacher Strasse 42**
**D-6231 Schwalbach a. Td. (DE)**

(72) Erfinder: **Leicher, Johann**
**Albert-Schweitzer-Strasse 1**
**D-6239 Eppstein 3 (DE)**
Erfinder: **Nordsieck, Carl-Ludwig**
**Ludwig-Tieck-Strasse 4**
**D-6000 Frankfurt a.M. 50 (DE)**

(74) Vertreter: **Boecker, Joachim, Dr.-Ing.**
**Rathenauplatz 2-8**
**D-6000 Frankfurt a.M. 1 (DE)**

Courier Press, Leamington Spa, England.

## Dia-Betrachter

Die Erfindung betrifft einen Dia-Betrachter gemäß dem Oberbegriff des Anspruches 1. Ein solcher Betrachter wird in dem DE—GM 18 95 855 erwähnt.

Dias werden gewöhnlich in Magazinen für Dia-Projektoren aufbewahrt. Durch die Optik eines Dia-Projektors wird das von den Strahlen durchleuchtete Bild auf der Leinwand auf dem Kopf stehend und seitenverkehrt abgebildet. Aus diesem Grunde werden in den Magazinen die Bilder in der Weise eingesetzt, daß nach der eben genannten Seitenvertauschung das Bild seitenrichtig auf der Leinwand abgebildet wird.

Es besteht ein starkes Bedürfnis, die in einem Projektor-Magazin eingeordneten Bilder in einem Dia-Betrachter sukzessive betrachten zu können, ohne die Dias von Hand aus dem Magazin herausnehmen zu müssen, was nicht nur umständlich ist, scndern auch die Gefahr eines falschen Zurücksteckens begründet. Bei einem Dia-Betrachter wird zwischen dem Auge des Betrachters und dem Dia eine Lupe eingefügt. Da hierbei eine Seitenvertauschung durch die Optik nicht stattfindet, muß sich das Dia im Verhältnis zum Auge des Betrachters in der seitenrichtigen Lage befinden. Das bedeutet, daß eine automatische Einrichtung zur Betrachtung der in einem Projektormagazin aufbewahrten Dias das zu betrachtende Dia bei dem Transport aus dem Magazin in die Betrachterlage—in Bezug uaf die Längsachse des Magazins—auf den Kopf stellen und in den Seiten vertauschen muß. Die hierfür erforderliche Bewegung ließe sich relativ einfach durch eine bloße Schwenkbewegung in einer Ebene ausführen, wenn das Magazin mit seiner Längsrichtung in der Betrachtungsrichtung orientiert wäre. Eine solche Orientierung ist jedoch nachteilig, da das aus dem Dia-Betrachter hervorstehende Magazin die betrachtende Person belästigt. Wünschenswert ist also ein Dia-Betrachter, bei dem die Längsrichtung des Magazins senkrecht zur Betrachtungsrichtung verläuft und auf der von der betrachtenden Person abgewendeten Seite des Dia-Betrachters angeordnet werden kann.

In dem DE—GM 18 95 855 wird zur Bewältigung des aufgezeigten Problems eine Umlenkeinrichtung mittels einer Spiegelanordnung vorgeschlagen. Eine solche Anordnung stellt jedoch einen zusätzlichen Aufwand an optischen Bauteilen dar. Für eine ausreichend exakte Führung des Strahlenganges ist eine hohe opto-mechanische Präzision erforderlich. In der genannten Druckschrift wird ferner vorgeschlagen, die erforderliche Transportbewegung des Dias durch eine mechanische Vorrichtung durchzuführen. Wie diese mechanische Vorrichtung, welche das Dia in verschiedenen Ebenen transportieren und schwenken muß, beschaffen sein soll, ist in der Druckschrift nicht ausgeführt. Die außerordentlich komplizierte Mechanik einer solchen Transport- und Schwenkvorrichtung dürfte der Grund dafür sein, daß bis heute keine Geräte nach dem Oberbegriff des vorliegenden Anspruches auf den Markt gelangt sind.

Der vorliegenden Erfindung liegt die Aufgabe zugrunde, einen Dia-Betrachter nach dem Oberbegriff des Anspruches 1 zu entwickeln, bei dem das Problem des komplizierten Transportweges des Dias aus der Magazinstellung in die Betrachterstellung durch eine relative einfache mechanische Einrichtung bewältigt wird.

Zur Lösung dieser Aufgabe wird eine Dia-Betrachter nach dem Oberbegriff des Anspruches 1 vorgeschalgen, welcher erfindungsgemäß die im kennzeichnenden Teil des Anspruches 1 genannten Merkmale hat.

Vorteilhafte Weiterbildungen der Erfindung sind in den Unteransprüchen genannt.

Durch die Erfindung läßt sich die komplizierte Transportbewegung des Dia-Rahmens aus dem Magazin in die Betrachterstellung durch eine relativ einfache mechanische Einrichtung herstellen. Antriebsmäßig braucht nur für eine translatorische Bewegung und eine anschließende Drehbewegung gesorgt werden. Die zusätzlichen Schwenkbewegungen, die erforderlich sind, um das Bild in die seitenrichtige Lage zu bringen, werden durch einfache Anschläge herbeigeführt, gegen welche der nur von einer seitlich vorstehenden Achse getragene Dia-Rahmen-Aufnehmer anschlägt und die ihn in die richtige Lage führen. Bei einer bevorzugten Ausführungsform der Erfindung werden diese während der Drehbewegung wirksam werdenden Anschläge von den Bauteilen der translatorischen Bewegung selbst gebildet. Die Bedienung kann über einen einzigen Bedienungshebel durchgeführt werden. Statt einer Handbedienung ist selbstverständlich auch eine motorische Bedienung möglich.

Anhand des in den Figuren gezeigten Ausführungsbeispieles soll die Erfindung näher erläutert werden. Es zeigen:

Fig. 1 einen Dia-Betrachter gemäß der Erfindung in Ansicht von der Seite der Betrachterperson mit abgenommenem Gehäuse,

Fig. 2 den Dia-Betrachter gemäß Fig. 1 in Draufsicht,

Fig. 3 den Dia-Betrachter gemäß Fig. 1 in Seitenansicht von der Seite A in Fig. 1,

Fig. 4 im Detail den Dia-Rahmen-Aufnehmer und den Rahmengreifer im Schnitt,

Fig. 5 den Rahmengreifer in Ansicht von der Seite B in Fig. 1,

Fig. 6 einen Teil der Ansicht gemäß Fig. 3 in der Betrachterendstellung des Dia-Rahmen-Aufnehmers,

Fig. 7 einen Teil der Ansicht gemäß Fig. 2 in der Betrachterendstellung des Dia-Rahmen-Aufnehmers,

Fig. 8 den Dia-Betrachter mit aufgesetztem Gehäuse von der Seite C in Fig. 2,

Fig. 9 den Dia-Betrachter mit aufgesetztem Gehäuse von der Seite B in Fig. 1.

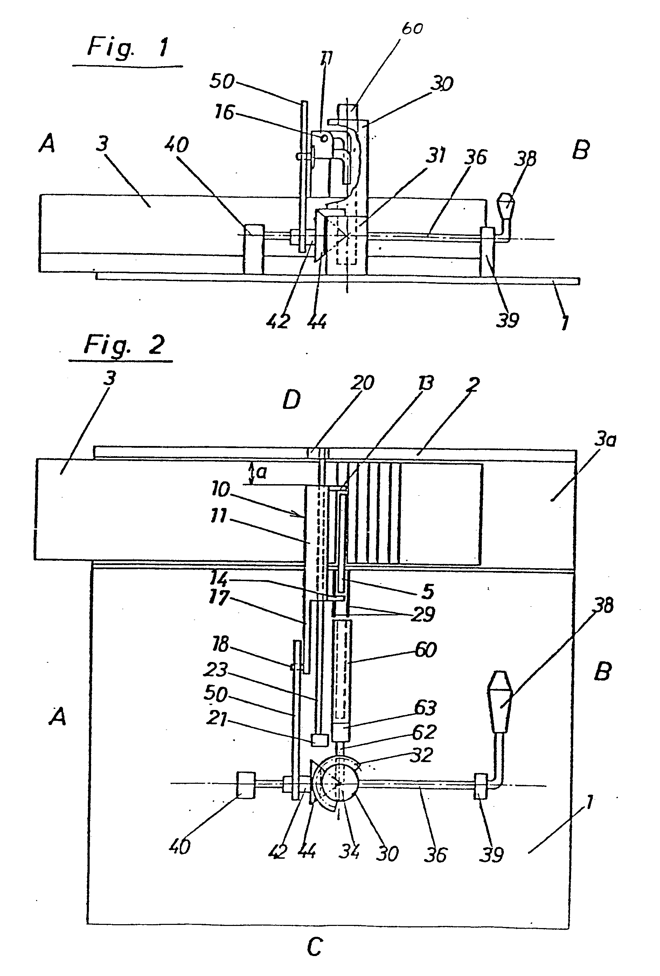

Zur besseren Orientierung in dem verschiedenen Ansichten sind in Fig. 2 die vier Seiten des Dia-Betrachters mit A, B, C und D bezeichnet. In den anderen Figuren erscheinen diese Bezeichnungen wieder.

In Fig. 1 ist die Säule 30 und der Dia-Rahmen-Aufnehmer 60 zum Teil weggebrochen, um den dahinterliegenden Rahmengreifer 11 besser darstellen zu können.

Die Figuren 1, 2 und 3 zeigen den Dia-Betrachter in der gleichen Arbeitsstellung, und zwar in der Stellung, in der ein Dia-Rahmen 5 um eine Teilstrecke a aus dem Magazin 3 herausgezogen ist. Der Dia-Betrachter ist auf einer Grundplatte 1 aufgebaut, auf welcher sich an der der Betrachterperson abgewandten Seite ein Führungsgang 3a für ein Magazin 3 befindet. Der Führungsgang ist in üblicher Weise mit einer nicht dargestellten Führungsschiene ausgerüstet.

Aus dem Magazin 3 wird ein Dia-Rahmen 5 seitlich in Richtung zum Betrachter mit Hilfe einer Schiebetransportvorrichtung 10 herausgezogen. Diese besteht aus einem Rahmengreifer 11, der auf einer durch die Bohrung 16 verlaufenden Gleitschiene 23 horizontal verschiebbar ist. Die Gleitschiene ist in einer Außenstütze 20 auf der Außenwand 2 und auf einer Innenstütze 21 gelagert. Der Rahmengreifer 11 hat an seinen Enden zwei Greifarme 13 und 14, mit denen der Dia-Rahmen 5 erfaßt wird.

Die Antriebskraft für die Bewegung des Rahmengreifers kommt von einer Antriebswelle 36, die über einen Bedienungshebel 38 gedreht werden kann. Mit der Welle 36 ist ein Schlitzhebel 50 kuppelbar. In diesen Schlitz greift ein Mitnehmer 18 ein, der auf einem Mitnehmervorsprung 17 des Rahmengreifers befestigt ist.

Der Rahmengreifer 11 schiebt den Dia-Rahmen 5 in einen flachen Dia-Rahmen-Aufnehmer 60, der in der Ebene des Dia-Rahmens liegt. Dieser Dia-Rahmen-Aufnehmer 60 wird allein von einer Tragachse 62 getragen, welche in einer Säule 30 drehbar gelagert ist. Die Säule 30 ist ihrerseits im ihre Längsachse drehbar auf einem nicht drehbaren Säulenträger 31 gelagert. Die Säule 30 kann ebenfalls über den Bedienungshebel 38 gedreht werden. Zu diesem Zweck sitzt auf der Antriebswelle 36 ein Zahnrad 44, z.B. ein Kegelzahnrad, welches in Eingriff mit einem Zahnkranz 32 an der Peripherie im unteren Bereich der Säule 30 steht. Dieser Zahnkranz braucht sich nicht über den gesamten Umfang zu erstrecken, da der erforderliche Drehwinkel nur etwa 90° beträgt. Die Antriebswelle 36 kann über eine Kupplung durch Längsverschiebung wahlweise mit dem Schlitzhebel 50 oder mit dem Zahnrad 44 gekuppelt werden. Die Welle ist in den schematisch angedeuteten Lagerböcken 39 und 40 gelagert.

Der Dia-Rahmen-Aufnehmer 60 besteht im wesentlichen aus zwei Außenwänden, zwischen denen ein Dia-Rahmen eingeschoben werden kann. Die auf der Seite A (Fig. 1) liegende Seitenwand hat eine Ausnehmung 64 (Fig. 4), damit beim Einschieben des Dia-Rahmens der innere Greifarm 14 des Rahmengreifers 11 nicht mit dem Aufnehmer kollidiert und dieser ohne Behinderung in Richtung b um die Tragachse 62 herum weggedreht werden kann. An seinem oberen Ende hat der Aufnehmer einen Tragachsenvorsprung 63, dessen Bedeutung später erläutert wird.

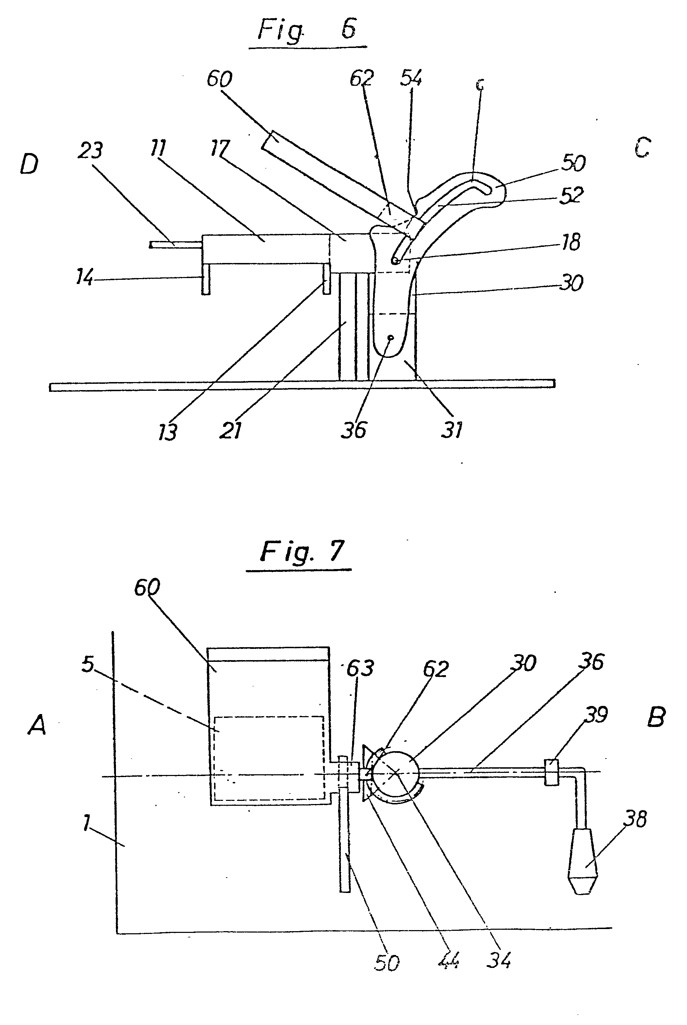

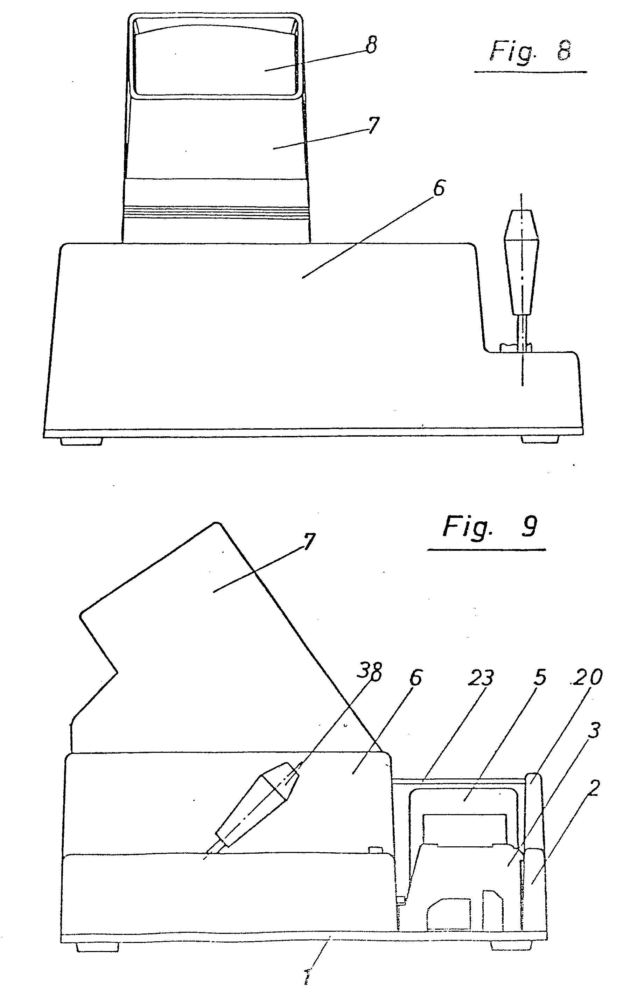

Die Funktionsweise des Dia-Betrachters gemäß dem Ausführungsbeispiel nach der Erfindung ist wie folgt: Zunächst wird über die Antriebswelle 36 der Rahmengreifer mittels des Schlitzhebels 50 über das Magazin geschoben. Es wird angenommen, daß sich hierbei im Rahmengreifer ein Dia-Rahmen befindet, der gerade betrachtet wurde und der durch die eben genannte Bewegung in das Magazin zurückgeschoben wird. Diese Endstellung ist erreicht, wenn sich der Mitnehmer 18 an der Stelle c des Schlitzhebels (Fig. 6) befindet. Der Schlitzhebel wird dann noch weiter gedreht, wobei durch den Bodenanschlag 56 ein nicht dargestellter Mechanismus betätigt wird, welcher das Magazin um eine Diateilung weiter in Richtung zur Seite A verschiebt. Dabei wird der nächste Dia-Rahmen zwischen die Greifarme 13, 14 geschoben. Dann wird der Schlitzhebel im Uhrzeigersinne zurückgedreht bis zu einem geeigneten Anschlag, welcher die andere Endstellung (in Richtung Seite C) des Rahmengreifers kennzeichnet. Dabei wird der Dia-Rahmen in den Dia-Rahmen-Aufnehmer eingeschoben. Zur Führung dienen hierbei die fest angeordneten Leitbleche 29 zwischen dem Magazin und dem Aufnehmer. Der Rahmengreifer 11 und der Schlitzhebel 50 haben jetzt die in Fig. 6 gezeigte Lage eingenommen.

Danach wird die Antriebswelle 36, beispielsweise durch leichtes Herausziehen von dem Schlitzhebel 50 abgekuppelt und mit dem Zahnrad 44 gekuppelt. Dann wird die Drehung des Bedienungshebels 38 in Richtung C fortgesetzt. Dabei dreht sich die Säule 30 um ihre Längsachse 34. Bei dieser Drehung schlägt der in einer Vertikalebene hängende Dia-Rahmenaufnehmer gegen den ruhenden Rahmengreifer 11 und wird infolgedessen im seine Tragachse 62 in eine Horizontalebene geschwenkt. Zu diesem Zweck ist der horizontale Abstand e (Fig. 4) zwischen dem Zentrum der Tragachse 62 und der etwas tiefer liegenden oberen horizontalen Fläche 12 des Rahmengreifers 11 so bemessen, daß unter Berücksichtigung der Dicke des Dia-Rahmen-Aufnehmers dieser in eine horizontale Lage gedrückt wird.

Nachdem die Säule 30 eine Drehung von etwa 90° ausgeführt hat, schlägt der Tragachsenvorsprung 63 gegen eine Anschlagfläche 54 des Schlitzhebels, die eine solche Neigung gegenüber der Horizontalen hat, daß der Dia-Rahmen-Aufnehmer aus der horizontalen Ebene etwas hochgeschwenkt wird. Diese Endlage ist in den Figuren 6 und 7 dargestellt. Diese Neigung wird so gewählt, daß sie das Betrachten des Dias für die schräg zum Dia-Betrachter sitzende Person am bequemsten macht.

Der Dia-Rahmen-Aufnehmer ist so ausgebildet, daß bei der zuletzt genannten Schwenkbewegung aus der Horizontalebene heraus der Dia-Rahmen 5 in die in Fig. 7 gezeigte Lage rutschen kann. Ursprünglich befand er sich in der anderen Endlage in Längsrichtung des Aufnehmers. Hierdruch wird erreicht, daß die Lupenoptik räumlich tiefer gesetzt werden kann und dadurch die Bauhöhe des Dia-Betrachters verkleinert werden kann.

Die Fig. 8 und 9 zeigen den Dia-Betrachter gemäß dem Ausführungsbeispiel nach der Erfindung mit aufgesetztem Gehäuse 6, dessen oberer Teil als Bildschacht 7 mit der Lupenoptik 8 ausgebildet ist.

Unterhalb des Dia-Rahmen-Aufnehmers in der in Fig. 7 gezeigten Stellung befindet sich eine nicht dargestellte, auf der Grundplatte 1 montierte Lichtquelle mit einer Mattscheibe. Der Dia-Rahmen-Aufnehmer 60 kann aus durchsichtigem Material bestehen, oder er hat Ausschnitte im Bereich, in dem der Dia-Rahmen, in der Betrachterstellung zu liegen kommt.

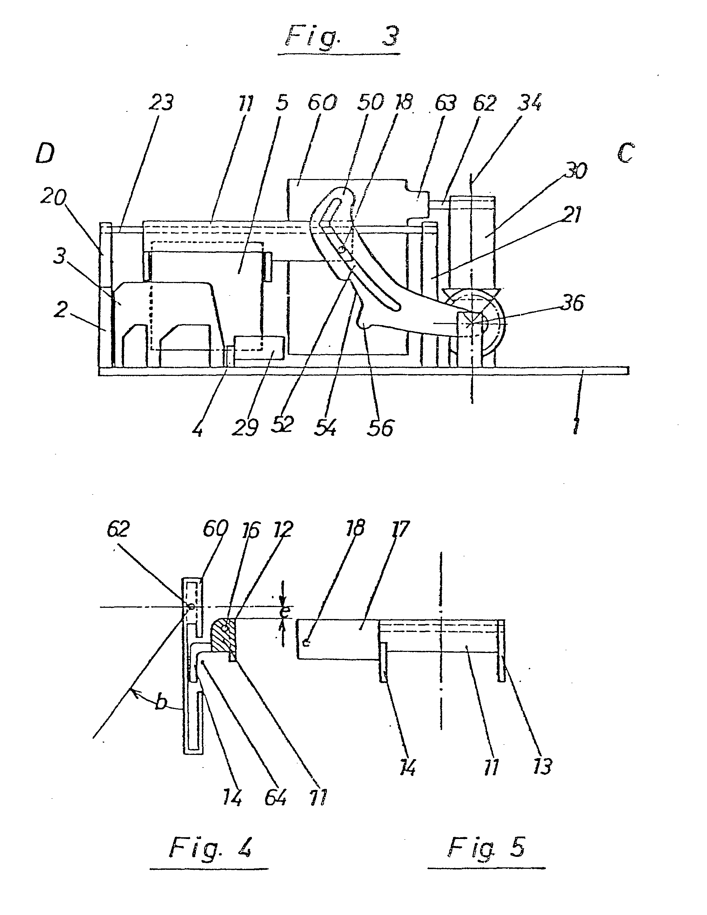

Die Bewegungsfreiheitsgrade der einzelnen Teile sind vorzugsweise durch Federn in einer Richtung vorgespannt. So kann der Rahmengreifer durch eine Federkraft in seiner Endlage zur Seite C hin gehalten werden. Die Tragachse 62 des Dia-Rahmen-Aufnehmers wird zweckmäßigerweise durch eine Federkraft beaufschlagt, die diesen Dia-Rahmen in die in den Figuren 2 und 3 gezeigte Lage drückt. Dadurch wird erreicht, daß der bei der oben beschriebenen Bewegung entsprechenden rückläufigen Bewegung der Aufnehmer mit Sicherheit wieder in die vertikale Ebene zurückgekippt wird.

Die Erfindung ist nicht auf das gezeigte Ausführungsbeispiel beschränkt. Vielmehr gestattet das offenbarte Bewegungsprinzip eine Vielfalt von Variationsmöglichkeiten:

Der Hebanschlag braucht nicht durch den Rahmengreifer 11 gebildet zu werden. Es kann ein beliebiger Anschlag verwendet werden, der sich irgendwo in dem Drehbereich des Dia-Rahmen-Aufnehmers im die Achse 34 befindet. Wichtig ist nur, daß seine obere Grenzfläche so gelegt ist, daß ein Hochklappen in die Horizontalebene bei der Drehbewegung um die Säulenachse 34 erzielt wird. Beispielsweise kann das Drehen um die Achse 34 auch im Uhrzeigersinne im Sinne von Fig. 2 geschehen, wobei in diesem Drehbereich dann ein Hebanschlag vorhanden sein muß. Die Drehung um die Säulenachse 34 muß auch nicht 90° betragen.

Wesentlich ist nur, daß durch diese Drehung der Dia-Rahmen in eine geeignete Stellung für die betrachtende Person gedreht wird, während das Magazin 3 durch seinen hervorstehenden Teil die betrachtende Person nicht belästigen kann.

In dem gezeigten Ausführungsbeispiel, bei dem der Hebanschlag sich am Beginn der 90°-Drehbewegung befindet, besteht die Gefahr eines Zurückschwenkens des Dia-Rahmen-Aufnehmers, nachdem dieser sich um fast 90° gedreht hat und damit über den Rahmengreifer 11 vollständig hinweggedreht ist. Ein solches Rückklappen wird bei dem gezeigten Ausführungsbeispiel dadurch verhindert, daß der Dia-Rahmen-Aufnehmer mit seinem Tragachsenvorsprung 63 auf jeden Fall auf der oberen Kante des Mitnehmervorsprunges 17 liegenbleibt. Zu diesem Zweck ist in dem Ausführungsbeispiel der Mitnehmervorsprung 17 so hoch ausgebildet, daß er an die obere Begrenzungsfläche des Rahmengreifers 11 heranreicht. Man kann jedoch auch den Mitnehmervorsprung weniger hoch ausbilden und dafür den Dia-Rahmen-Aufnehmer mit einem (in Fig. 3) sich weiter nach unten erstreckenden Tragachsenvorsprung 63 versehen.

Der Schwenkanschlag, durch welchen der Aufnehmer kurz vor seiner Betrachterendlage aus der Horizontalebene etwas herausgehoben wird, muß nicht von dem Schlitzhebel 50 gebildet werden. Es kann ein geeigneter Anschlag sein, der irgendwo im (im Sinne der Fig. 3) oberen Bereich des Aufnehmers anschlägt. Die Abschrägung zur Erzielung der gewünschten Neigung kann entweder durch Abschrägung der ruhenden Anschlagfläche—wie in Fig. 3—oder durch Abschrägung der anschlagenden Fläche des Aufnehmers erzielt werden.

## Patentansprüche

1. Dia-Betrachter mit einer Einrichtung zum Transport der Dias aus einem Standard-Projektor-Magazin (3) in die Betrachtungslage hinter einer Lupenoptik (8), wobei das Magazin mit seiner Längsachse senkrecht zur optischen Achse und an der von der Betrachterperson abgewendeten Seite des Dia-Betrachters angeordnet und geführt ist und die Dias beim Transport eine Schwenkbewegung ausführen dadurch gekennzeichnet,

daß eine Schiebetransportvorrichtung (10) vorhanden ist, mit welcher ein Diarahmen (5) in seitlicher Richtung aus dem Magazin (3) herausziehbar ist, daß ein plattenförmiger Dia-Rahmen-Aufnehmer (60) vorhanden ist, der in derselben Vertikalebene wie der aus dem Magazin herausziehbare Dia-Rahmen (5) liegt und in welchen der Dia-Rahmen durch die seitliche Herausziehbewegung einschiebbar ist, daß der Dia-Rahmen-Aufnehmer ausschließlich von einer fest mit dem Dia-Rahmen-Aufnehmer verbundenen waagrechten Tragachse (62) getragen wird, die parallel zur Ebene des Dia- Rahmen-Aufnehmers liegt und an der der Betrachterperson zugewendeten Seite aus dem Dia-Rahmen-Aufnehmer hervorsteht, daß die Tragachse in einer senkrechten Säule (30) drehbar gelagert ist, welche Säule ihrerseits um ihre Längsachse (34) drehbar gelagert ist, daß innerhalb eines Schwenkbereiches von weniger als 90° um die Säulenachse (34) ein Hebanschlag vorhanden ist, der eine obere horizontale Fläche (12 in Fig. 4) hat, die um ein solches Maß (e) tiefer als die Tragachse des Dia-Rahmen-Aufnehmers (60) liegt, daß beim Schwenken des Dia-Rahmen-Aufnehmers um die Säulenachse (34) der Hebanschlag den Dia-Rahmen-Aufnehmer um seine Tragachse (62) in die Horizontalebene schwenkt.

2. Dia-Betrachter nach Anspruch 1, dadurch gekennzeichnet,

daß der Dia-Rahmen-Aufnehmer kurz vor dem Ende der 90°-Drehbewegung um die Säulenachse (34) gegen einen derart geformten Schwenkanschlag (54) läuft, daß bei der folgenden Vollendung der 90°-Drehbewegung der Dia-Rahmen-Aufnehmer um seine Tragachse (62) schräg nach oben schwenkt.

3. Dia-Betrachter nach einem der vorhergehenden Ansprüche, dadurch gekennzeichnet,

daß der Schwenkanschlag (54) von der oberen Begrenzung des Rahmengreifers (11) der Schiebetransportvorrichtung gebildet wird.

4. Dia-Betrachter nach einem der vorhergehenden Ansprüche, dadurch gekennzeichnet,

daß der Dia-Rahmen-Aufnehmer (60) so ausgebildet ist, daß der Dia-Rahmen (5) in Längsrichtung des Dia-Rahmen-Aufnehmers möglichst reibungsfrei frei verschiebbar ist.

5. Dia-Betrachter nach einem der vorhergehenden Ansprüche, dadurch gekennzeichnet,

daß die Schiebebewegung der Schiebtransporteinrichtung (10) und die Drehbewegung der Säule (30) nacheinander über denselben Bedienungshebel (38) ausführbar sind.

6. Dia-Betrachter nach einem der vorhergehenden Ansprüche, dadurch gekennzeichnet,

daß die Schiebtransporteinrichtung (10) eine Gleitschiene (23) enthält, die sich von einer Innenstütze (21) nahe der Säule (30) bis zu einer von der Betrachterperson aus gesehen jenseits des Magazins befindlichen Außenstütze (14) erstreckt, daß auf dieser Gleitschiene ein verschiebbarer Rahmengreifer (11) mit zwei senkrechten Greifarmen (13, 14) gleitbar angeordnet ist und daß die horizontale Verschiebung des Rahmengreifers (11) über einen Mitnehmer (18) durch einen mit einem kurvenförmigen Schlitz (52) versehenen Hebel (50) erfolgt, der auf der Antriebswelle (36) sitzt.

7. Dia-Betrachter nach einem der vorhergehenden Ansprüche, dadurch gekennzeichnet,

daß die Antriebswelle (36) senkrecht zur Schiebetransportvorrichtung (10) durch einen nicht drehbaren Träger (31) der Säule (30) verläuft und daß ein auf der Antriebswelle (36) sitzendes Zahnrad (44) mit einem dazu senkrecht orientierten Zahnkranz (32) an der Säule (30) im Eingriff steht.

8. Dia-Betrachter nach Anspruch 7, dadurch gekennzeichnet,

daß die Antriebswelle (36) über eine Kupplung (42) wahlweise mit dem Zahnrad (44) oder dem Schlitzhebel (50) kuppelbar ist.

9. Dia-Betrachter nach einen der Ansprüche 2 bis 8, dadurch gekennzeichnet,

daß der Schwenkanschlag (54) von der Kante des Schlitzhebels (50) gebildet wird.

## Claims

1. Slide projector with an arrangement for moving the slide holders from a standard-projector-magazine (3) into the watching position behind a lense-optic (8) whereby the magazine is located and guided with its longitudinal axis perpendicular to the optical axis on the side of the slide projector opposite to the side of the operator, and whereby the slide holders perform a pivoting movement, characterisd in that a translatory transporting device (10) is provided capable of drawing out a slide holder (5) in sideward direction from the magazine, that a plate-like slide-holder-receiver (60) is provided positioned in the same vertical plane as the slide holder (5) drawn out from the magazine and receiving this slide holder (5) by the sideward drawing movement, that the slide-holder-receiver (60) is carried only by a horizontal bearing axle (62) rigidly connected to the slide-holder-receiver (60), extending parallel to the plane of the slide-holder-receiver (60) and protruding from the slide-holder-receiver (60) toward the side of the operator, that the bearing axle (62) is pivotally journaled in a vertical column (30), which column is pivotally journaled on its part around its longitudinal axis (34), and that within a swinging range of less than 90° around the axis (34) of the column (30) a lift catch is arranged provided with an upper horizontal plane (12 in Figure 4) that is positioned such a distance (e) lower than the bearing axle of the slide-holder-receiver, that a swinging the slide-holder-receiver around the axis (34) of the column (30) the lift catch will turn the slide-holder-receiver around its bearing axle (62) into the horizontal plane.

2. Slide projector according to claim 1, characterised in that the slide-holder-receiver (60) near the end of the 90° rotational movement around the axis (34) of the column abuts against a swing catch (54) shaped in such a way that the slide-holder-receiver during the following completion of the 90° rotational movement will be swung into a position obliquely towards above.

3. Slide projector according to any of the preceding claims, characterised in that the swing catch (54) is formed by the upper edge of the slide-holder-catcher (11) of the translatory transporting device (10).

4. Slide projector according to any of the preceding claims, characterised in that the slide-holder-receiver (60) is shaped and arranged in such way that the slide-holder (5) can be moved freely in the longitudinal direction of the slide-holder-receiver with as little friction as possible.

5. Slide projector according to any of the preceding claims, characterised in that the translatory movement of the translatory transporting device (10) and the rotational movement of the column (30) are executed consecutively by means of one and the same operating lever (38).

6. Slide projector according to any of the preceding claims, characterised in that the translatory transporting device (10) is provided with a guide bar (23), which extends from an inner post (21) close to the column (30) to an outer post (14) located beyond the magazine seen from the operator's side, that a movable slide-holder-catcher (11) with two perpendicular catcharms (13, 14) is slidably mounted on the guide bar (23), and that the horizontal movement of the slide-holder-catcher (11) is achieved by means of a driving pin (18) extending through a curve slot (52) of a lever (50), which is positioned on the driving axle (36).

7. Slide projector according to any of the preceding claims, characterised in that the driving axle (36) extends perpendicularly to the translatory transporting device (10) through a non-rotatable supporting means (31) of the column (30) and that a gearwheel (44) mounted on the driving axle is engaged with a rim gear (32) of the column (30), which rim gear (32) is oriented perpendicularly to said gearwheel (44).

8. Slide projector according to claim 7, characterised in that the driving axle (36) can be connected by means of a coupler (42) either to the gearwheel (44) or to the slot-lever (50).

9. Slide projector according to any of the claims 2 to 8, characterised in that the swing catch (54) is formed by the edge of the slot-lever (50).

**Revendications**

1. Visionneuse pour diapositives comprenant un dispositif de transport des diapositives à partir d'un chargeur de projecteur standard (3) vers la position d'observation derrière un objectif en forme de loupe (8), le chargeur étant agencé et guidé du côté de la visionneuse pour diapositives, opposé à l'observateur, et avec son axe longitudinal perpendiculaire à l'axe optique, les diapositives réalisant au course du transport un mouvement de pivotement, caractérisée en ce qu'il est prévu un dispositif de transport par coulissement (10) à l'aide duquel un cadre de diapositive (5) peut être prélevé dans une direction latérale à partir du chargeur (3), en ce qu'il est prévu un organe récepteur de cardre de diapositive (60) en forme de plaque, qui est situé dans le même plan vertical que le cadre de diapositive (5) qui peut être prélevé du chargeur et dans lequel le cadre de diapositive peut être enfoncé par le mouvement de prélèvement latéral, en ce que l'organe récepteur de cadre de diapositive est supporté exclusivement par un axe de support horizontal (62) qui est relié de manière fixe à l'organe récepteur de cadre de diapositive, est situé parallèlement au plan de l'organe récepteur de cadre de diapositive et fait saillie à partir de l'organe récepteur de cadre de diapositive du côté orienté vers l'observateur, en ce que l'axe de support est supporté de manière à pouvoir pivoter dans une colonne verticale (30) qui, à son tour, est supportée de manière à pouvoir pivoter autour de son axe longitudinal (34), et en ce que, à l'intérieur d'une zone de pivotement de moins de 90° autour de l'axe de la colonne (34), il est prévu une butée de levage qui présente une surface horizontale supérieure (12 sur la Figure 4) qui est située plus bas que l'axe de support de l'organe de récepteur de cadre de diapositive (60) d'une mesure (e) telle que, lors du pivotement de l'organe récepteur de cadre de diapositive autour de l'axe de la colonne (34), la butée de levage fait pivoter l'organe récepteur de cadre de diapositive autour de son axe de support (62) dans le plan horizontal.

2. Visionneuse pour diapositives suivant la revendication 1, caractérisée en ce que l'organe récepteur de cadre de dispositive passe, peut avant la fin du mouvement de pivotement de 90° autour de l'axe de la colonne (34), contre une butée de pivotement (54) façonnée de telle façon que, lorse de l'achèvement ultérieur du mouvement de pivotement de 90°, l'organe récepteur de cadre de diapositive pivote autour de son axe de support (62) de façon à être incliné vers le haut.

3. Visionneuse pour diapositives suivant l'une des revendications précédentes, caractérisée en ce que la butée de pivotement (54) est formée par la limite supérieure du capteur de cadre (11) du dispositif de transport par coulissement.

4. Visionneuse pour diapositives suivant l'une des revendications precécédentes, caractérisée en ce que l'organe récepteur de cadre de diapositive (60) est réalisé de façon que le cadre de diapositive (5) puisse être déplacé librement, autant que possible sans frottement, suivant la direction longitudinale de l'organe récepteur de cadre de diapositive.

5. Visionneuse pour diapositives suivant l'une des revendications précédentes, caractérisée en ce qu le mouvement de coulissement du dispositif de transport par coulissement (10) et le mouvement de pivotement de la colonne (30) peuvent être effectués successivement par l'intermédiaire du même levier de manoeuvre (38).

6. Visionneuse pour diapositives, suivant l'une des revendications précédentes, caractérisée en ce que le dispositif de transport par coulissement (10) comprend une glissière (23) qui s'étend depuis un support interne (21) à proximité de la colonne (30) jusqu'à un support externe (14) qui est situé, vu par l'observateur, de l'autre côté du chargeur, en ce qu'un capteur de cadre (11) déplaçable présentant deux bras preneurs verticaux (13, 14) est agencé de manière à pouvoir coulisser sur cette glissière et en ce que le déplacement horizontal du capteur de cadre (11) a lieu par l'intermédiaire d'un toc d'entraînement (18) grâce à un levier (50) qui est pourvu d'une fente (52) en forme de came et qui est situé sur l'arbre d'entraînement (36).

7. Visionneuse pour diapositives suivant l'une des revendications précédentes, caractérisée en ce que l'arbre d'entraînement (36) passe perpendiculairement au dispositif de transport par coulissement (10) à travers un support incapable de pivoter (31) de la colonne (30) et en ce qu'une roue dentée (44) agencée sur l'arbre d'entraînement (36) est en prise avec une couronne dentée (32) orientée perpendiculairement à cette roue dentée et agencée sur la colonne (30).

8. Visionneuse pour diapositives suivant la revendication 7, caractérisée en ce que l'arbre d'entraînement (36) peut être accouplé par l'intermédiaire d'un élément d'accouplement (42) sélectivement avec la roue dentée (44) ou avec le levier à fente (50).

9. Visionneuse pour diapositives suivant l'une des revendications 2 à 8, caractérisée en ce que la butée de pivotement (54) est formée par l'arête du levier à fente (50).

Fig. 1

Fig. 2

1

Fig. 3

Fig. 4

Fig. 5

Fig. 6

Fig. 7

Fig. 8

Fig. 9